# EUROPEAN PATENT APPLICATION

(11) **EP 4 593 337 A1**
(43) Date of publication of application: **30.07.2025**
(21) Application number: 22959101.1
(22) Date of filing: 21.09.2022
(51) Int. Cl.: H04L 27/00

(54) **INFORMATION PROCESSING METHODS AND APPARATUSES, COMMUNICATION DEVICE AND STORAGE MEDIUM**

(71) Applicant: Beijing Xiaomi Mobile Software Co., Ltd., Beijing 100085 (CN)
(72) Inventor: LIU, Jianning, Beijing 100085 (CN)
(74) Representative: Dehns Germany Partnerschaft mbB
(86) International application number: PCT/CN2022/120346
(87) International publication number: WO 2024/060091

(57) **Abstract**

Provided in the embodiments of the present disclosure are information processing methods and apparatuses, a communication device and a storage medium. The information processing method executed by a source user equipment (UE) comprises: broadcasting a request message, the request message comprising destination information and the relay information of the source UE, the destination information being used for indicating an alternative user equipment to user equipment (U2U) relay of the source UE, and the relay information of the source UE being used for indicating whether the source UE can serve as a target UE for U2U relay communications.

## Description

### TECHNICAL FIELD

The present disclosure relates to, but is not limited to, the field of wireless communication technologies, and in particular to a method and apparatus for processing information, a communication device and a storage medium.

### BACKGROUND

When a User Equipment (UE) is within or outside the coverage of a 3GPP network, it can communicate with other devices, such as UEs, by means of relay devices. The UE that provides such relay communication may be called a UE to UE (U2U) relay.

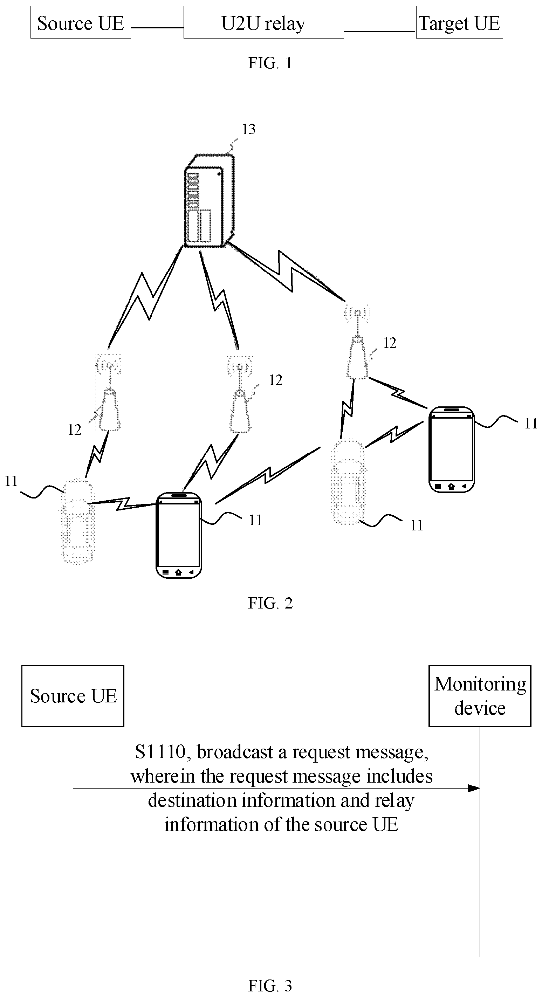

FIG. 1 shows a schematic diagram of communication between a source UE and a target UE through a U2U relay. In this way, even if a Sidelink (SL) cannot be established between the source UE and the target UE, the source UE and the target UE can still communicate with the help of another UE (i.e., the U2U relay).

### SUMMARY

Embodiments of the present disclosure provide a method and apparatus for processing information, a communication device, and a storage medium.

A first aspect of embodiments of the present disclosure provides a method for processing information, wherein the method is performed by a source User Equipment (UE), and the method includes:
broadcasting a request message, wherein the request message includes destination information and relay information of the source UE;
wherein the destination information is configured to indicate a candidate User Equipment to User Equipment (U2U) relay of the source UE; and
the relay information of the source UE is configured to indicate whether the source UE is capable of acting as a target UE for U2U relay communication.

A second aspect of embodiments of the present disclosure provides a method for processing information, which is performed by a monitoring device, and the method includes:
monitoring a request message sent by a source UE, wherein the request message at least includes destination information and relay information of the source UE;
wherein the destination information is configured to indicate a candidate User Equipment to User Equipment (U2U) relay of the source UE; and
the relay information of the source UE is configured to indicate whether the source UE is capable of acting as a target UE for U2U relay communication.

A third aspect of embodiments of the present disclosure provides an apparatus for processing information, wherein the apparatus includes:
a sending module, configured to broadcast a request message, wherein the request message includes destination information and relay information of the source UE;
wherein the destination information is configured to indicate a candidate User Equipment to User Equipment (U2U) relay of the source UE; and
the relay information of the source UE is configured to indicate whether the source UE is capable of acting as a target UE for U2U relay communication.

A fourth aspect of embodiments of the present disclosure provides an apparatus for processing information, wherein the apparatus includes:
a receiving module, configured to monitor a request message sent by a source UE, wherein the request message at least includes destination information and relay information of the source UE;
wherein the destination information is configured to indicate a candidate User Equipment to User Equipment (U2U) relay of the source UE; and
the relay information of the source UE is configured to indicate whether the source UE is capable of acting as a target UE for U2U relay communication.

A fifth aspect of embodiments of the present disclosure provides a communication device, including a processor, a transceiver, a memory, and an executable program stored in the memory and capable of being run by the processor, wherein the processor executes the method for processing the information provided in the first aspect or the second aspect when running the executable program.

A sixth aspect of embodiments of the present disclosure provides a computer storage medium having an executable program stored thereon, which, when executed by a processor, is capable of implementing the method for processing the information provided in the first aspect or the second aspect.

A seventh aspect of embodiments of the present disclosure provides a communication system, including a source User Equipment (UE) and a monitoring device;
the source UE is configured to execute the method for processing the information provided by any technical solution of the first aspect; and
the monitoring device is configured to execute the method for processing the information provided by any technical solution of the second aspect.

In the technical solution provided by embodiments of the present disclosure, the relay information of the source UE is carried in the request message broadcast by the source UE. The relay information indicates whether the source UE can be used as the target UE for the U2U relay communication. In this way, when receiving the request message, other monitoring devices that can act as the U2U relays can create or update the target UE information for the U2U relay maintained by themselves. On the one hand, other monitoring devices do not need to discover the target UE by sending announcement messages. On the other hand, since the relay information is sent by the source UE itself, compared with the inaccurate problem of the monitoring device sending the announcement message and discovering the target UE by monitoring the response message, the accuracy of the target UE information created or maintained by the U2U relay is improved.

It should be noted that the above general description and the following detailed description are merely exemplary and explanatory and should not be construed as limiting of embodiments of the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain principles of embodiments of the present disclosure.
FIG. 1 shows a schematic diagram of U2U relay communication according to an embodiment of the present disclosure;
FIG. 2 shows a schematic structural diagram of a wireless communication system according to an embodiment of the present disclosure;
FIG. 3 shows a schematic flowchart of a method for processing information according to an embodiment of the present disclosure;
FIG. 4 shows a schematic flowchart of a method for processing information according to an embodiment of the present disclosure;
FIG. 5 shows a schematic flowchart of a method for processing information according to an embodiment of the present disclosure;
FIG. 6 shows a schematic flowchart of a method for processing information according to an embodiment of the present disclosure;
FIG. 7 shows a schematic flowchart of a method for processing information according to an embodiment of the present disclosure;
FIG. 8 shows a schematic flowchart of a method for processing information according to an embodiment of the present disclosure;
FIG. 9 shows a schematic flowchart of a method for processing information according to an embodiment of the present disclosure;
FIG. 10 shows a schematic flowchart of a method for processing information according to an embodiment of the present disclosure;
FIG. 11 shows a schematic flowchart of a method for processing information according to an embodiment of the present disclosure;
FIG. 12 shows a schematic structural diagram of an apparatus for processing information according to an embodiment of the present disclosure;
FIG. 13 shows a schematic structural diagram of an apparatus for processing information according to an embodiment of the present disclosure;
FIG. 14 shows a schematic structural diagram of a UE according to an embodiment of the present disclosure; and
FIG. 15 shows a schematic structural diagram of a communication device according to an embodiment of the present disclosure.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of the embodiments do not represent all implementations consistent with the present disclosure. Instead, they are merely examples of apparatuses and methods consistent with some aspects of the embodiments of the present disclosure.

The terms used in the embodiments of the present disclosure are merely for the purpose of describing particular embodiments and are not intended to limit the embodiments of the present disclosure. As used in the present disclosure, the singular forms "a", "said" and "the" are intended to include the plural forms as well, unless the context clearly indicates otherwise. It should also be understood that the term "and/or" as used herein refers to and includes any or all possible combinations of one or more of the associated listed items.

It should be understood that, although the terms first, second, third, etc. may be used in embodiments of the present disclosure to describe various information, such information should not be limited to these terms. These terms are only used to distinguish the same type of information from each other. For example, without departing from the scope of embodiments of the present disclosure, first information may also be referred to as second information, and similarly, the second information may also be referred to as the first information. Depending on the context, the word "if" as used herein can be interpreted as "upon" or "when" or "in response to determination".

Reference is made to FIG. 2, which shows a schematic structural diagram of a wireless communication system provided by an embodiment of the present disclosure. As illustrated in FIG. 2, the wireless communication system is a communication system based on cellar mobile communication technologies. The wireless communication system may include several terminals 11 and several access devices 12.

The terminal 11 may refer to a device that provides voice and/or data connectivity to a user. The terminal 11 may communicate with one or more core networks via a Radio Access Network (RAN). The terminal 11 may be an Internet of Things terminal, such as a sensor device, a mobile phone (or called "cellular" phone) and a computer with the Internet of Things terminal, for example, may be a fixed, portable, pocket-sized, handheld, built-in computer or vehicle-mounted device. For example, the terminal may be a station (STA), a subscriber unit, a subscriber station, a mobile station, a mobile, a remote station, an access point, a remote terminal, an access terminal, a user terminal, a user agent, a user device, or user equipment. Or, the terminal 11 may also be a device of an unmanned aerial vehicle. Or, the terminal 11 may also be a vehicle-mounted device, such as a trip computer with a wireless communication function, or a wireless communication device connected to an external trip computer. Or, the terminal 11 may also be a roadside device, such as a streetlight, a signal light or another roadside device with a wireless communication function.

The access device 12 can be a network-side device in a wireless communication system. The wireless communication system can be the 4th generation mobile communication (4G) system, also known as a Long Term Evolution (LTE) system; or, the wireless communication system can be a 5G system, also known as a New Radio (NR) system or a 5G NR system. Or, the wireless communication system may also be a next-generation system of 5G system or a MTC system. An access network in the 5G system can be referred to as a New Generation-Radio Access Network (NG-RAN).

The access device 12 can be an evolved access device (eNB) adopted in the 4G system. Alternatively, the access device 12 can also be a gNB with a central distributed architecture in the 5G system. When the access device 12 adopts the central distributed architecture, it usually includes a Central Unit (CU) and at least two Distributed Units (DUs). The CU is provided with a protocol stack of a Packet Data Convergence Protocol (PDCP) layer, a Radio Link Control (RLC) layer, and a Media Access Control (MAC) layer. The DU is provided with a protocol stack of a Physical (PHY) layer. A specific implementation of the access device 12 is not limited in embodiments of the present disclosure.

A wireless connection can be established between the access device 12 and the terminal 11 through a radio air interface. In different implementations, the radio air interface is a radio air interface based on the 4th generation mobile communication network technology ( 4G ) standard; or, the radio air interface is a radio air interface based on a 5th generation mobile communication network technology (5G) standard, such as the NR. Or, the radio air interface may also be a radio air interface based on a 5G next-generation mobile communication network technology standard.

As shown in FIG. 3, embodiments of the present disclosure provide a method for processing information, which is performed by a source UE and includes:
in S1110, a request message is broadcasted, and the request message includes destination information and relay information of the source UE;
the destination information is configured to indicate a candidate User Equipment to User Equipment (U2U) relay of the source UE; and
the relay information of the source UE is configured to indicate whether the source UE can or is capable of acting as a target UE for U2U relay communication.

The source UE here is any UE that initiates the U2U relay communication, that is, an initiation end of the U2U relay communication, and the name of the UE is not limited to the source UE, and can also be called a first UE, etc.

The source UE may be a communication terminal such as a mobile UE or a fixed UE. Specifically, the source UE includes but is not limited to a mobile phone, a tablet computer, a wearable device, a vehicle-mounted device, a smart home device and/or a smart office device.

The target UE is a receiving end of the U2U relay communication, and the name of the UE is not limited to the target UE, and can also be called a second UE, etc.

In embodiments of the present disclosure, when the source UE has a relay communication request, it will broadcast the request message. For example, the source UE broadcasts the request message. In this way, the source UE can discover, by broadcasting the request message, the candidate device that is located in proximity to it and can act as the U2U relay.

The request message includes the destination information, which may be an address and/or an identity of a U2U relay that the source UE wants to discover. For example, the destination information may be a Destination Layer 2 Identity.

The destination information included in the request message may be a single piece or multiple pieces. For example, if the source UE requests multiple U2U relays to distribute information the source UE needs to send, the request message may include multiple pieces of destination information.

The request message further includes the relay information of the source UE. If a monitoring device that can act as the U2U relay receives the relay information of the source UE, it can be determined that the source UE can act as the target UE of other U2U relay communications. If the source UE acts as the target UE of other U2U relay communications, information of the source UE can be added to target UE information maintained by the monitoring device.

The request message may be a request message for the source UE to discover its own U2U relay using model B. That is, the request message may be a Solicitation message.

For example, the relay information of the source UE indicates that the source UE can act as the target UE for the U2U relay communication, which can be understood as at least one of:
the source UE being capable of acting as the target UE for the U2U relay communication;
the source UE wanting to be the target UE for the U2U relay communication;
the source UE intending to be the target UE for the U2U relay communication;
the source UE may act as the target UE for the U2U relay communication;
the source UE acting as the target UE for the U2U relay communication; and
the source UE supporting acting as the target UE for the U2U relay communication.

It should be noted that the U2U relay communication here is not the current U2U relay communication initiated by the source UE, but the subsequent U2U relay communication.

For example, some source UEs are authorized by a network as being capable of acting as target UEs for the U2U relay, but when a user operation or a user setting detected by the source UE indicates that the user does not want this UE to act as the target UE for the U2U relay communication, the source UE has a capability to act as the target UE for the U2U relay communication, but does not want to act as, does not intend to act as, or does not support acting as the target UE for the U2U relay communication.

In short, if the relay information of the source UE can indicate that the source UE has the capability to act as the target UE for the U2U relay communication or does not have the capability to act as the target UE for the U2U relay communication.

In some embodiments, the request message may further include: source UE information, and the source UE information may identify an identity of the source UE. For example, the source UE information may be a Source Layer 2 Identity.

In an embodiment of the present disclosure, the request message may further include: discovery type information. A discovery type indicated by the discovery type information may be model A and model B. For example, in the embodiment of the present disclosure, the discovery type information may be used to indicate that the current mutual discovery between UEs adopts model B.

In this way, the U2U relay does not need to send the target UE through an additional discovery message and/or discover the target UE through a pre-configured manner, thereby reducing the signaling overhead of the U2U relay discovering the target UE and reducing the phenomenon that due to the UE replying a response message, the UE is incorrectly added to the target UE information for the U2U relay.

In an embodiment, the relay information of the source UE includes:
relay hop count information, indicating the number of relay hops supported by the source UE when acting as the target UE for the U2U relay communication;
   and/or,
relay indication, indicating whether the source UE is capable of acting as the target UE for the U2U relay communication.

In an embodiment, the relay information may include the relay hop count information alone, and the relay hop count information may indicate the number of relay hops supported by the source UE of the current U2U relay communication when acting as the target UE for the U2U relay communication. In this case, if the source UE supports acting as the target UE for the U2U relay communication, the number of relay hops is at least 1.

If the source UE does not support acting as the target UE for the U2U relay communication, the number of relay hops is 0 or a value of the number of relay hops is null. In this way, even if the relay information includes the relay hop count information alone, the U2U relay can easily know whether the source UE supports acting as the target UE for the U2U relay, and also know the number of relay hops supported by the source UE when it acts as the target UE for the U2U relay communication.

In another embodiment, the relay information may include the relay indication alone, and the relay indication may directly indicate whether the source UE supports acting as the target UE for the U2U relay communication.

For example, the relay indication may be carried by one bit, and two bit values of the bit may respectively represent that the source UE supports acting as the target UE for the U2U relay communication, or does not support acting as the target UE for the U2U relay communication.

It should be noted that the method further includes:
before the request message is sent, an authorization request is sent to a network device, and the authorization request may be used to request the network device to determine whether the UE has an authority to obtain the U2U relay; and
an authorization response is received. The authorization response may include relevant information indicating whether the UE that sends the authorization request has the authority for the U2U relay.

For example, the relevant information may include a ProSe code or a Relay Service Code (RSC) of a relay service possessed by the UE. The proximity service code includes but is not limited to a ProSe query code and/or a ProSe query code (PQC) and/or a ProSe response code (PRC), where ProSe is the abbreviation of Proximity Service, which refers to the proximity service.

In yet another embodiment, the relay information includes both the relay hop count information and the relay indication.

The relay hop count information indicates the number of hops supported by the source UE when acting as the target UE for the U2U relay communication. In addition, the relay indication can be used by the U2U relay to quickly know whether the source UE can act as the target UE for the U2U relay. In some cases, the relay indication may also be used by the U2U relay to determine whether the relay hop count information needs to be further decoded. If the relay indication indicates that the source UE does not support acting as the target UE for the U2U relay communication, the U2U relay does not need to decode the relay hop count information, thereby reducing unnecessary decoding.

In some cases, the source UE has the capability to act as the target UE for the U2U relay communication, but according to a user instruction, this UE does not want to act as the target UE for the U2U relay communication. In some cases, the source UE does not have the capability to act as the target UE for the U2U relay communication. For example, if the source UE does not obtain authorization from the network side to act as the target UE for the U2U relay communication, it is one of manifestations that the source UE does not have the capability to act as the target UE for the U2U relay communication.

For example, the source UE is able to act as the target UE for the U2U relay communication, and the relay hop count information indicates that the number of relay hops supported by the source UE is greater than 0; or, the source UE cannot act as the target UE for the U2U relay communication, and the relay hop count information indicates that the number of relay hops supported by the source UE is equal to 0 or the value of the relay hop count information is null.

In some embodiments, the source UE wants to act as the target UE for the U2U relay communication, and the relay indication has a first value indicating that the source UE wants to act as the target UE; or, the source UE wants to act as the target UE for the U2U relay communication, and the relay indication has a second value indicating that the source UE does not want to act as the target UE.

If the relay indication may include one or more bits, these bits have different values, where the first value is a first value indicating that the source UE wants to act as the target UE, and other values may be a second value indicating that the source UE does not want to act as the target UE.

In short, the second value is different from the first value.

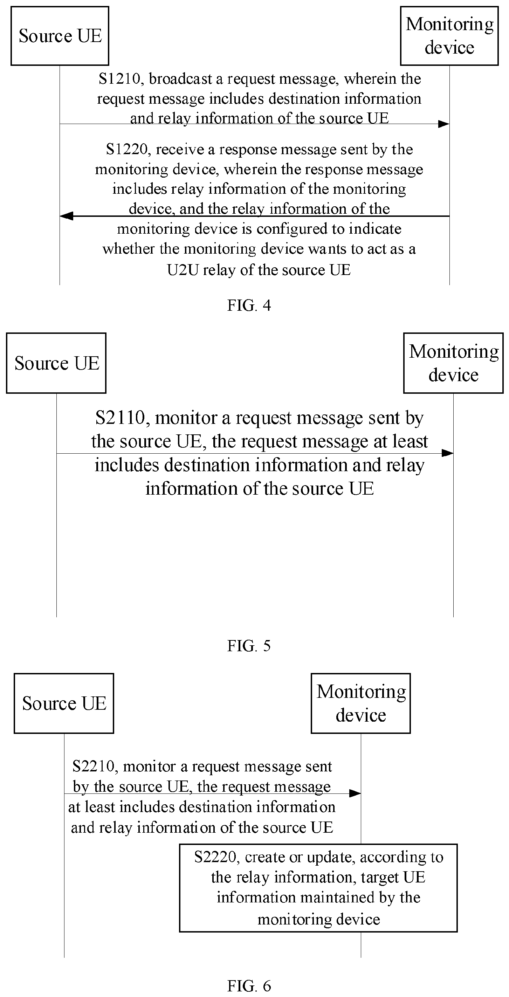

As shown in FIG. 4, embodiments of the present disclosure provide a method for processing information, which is performed by a source UE and includes:
in S1210, a request message is broadcasted, and the request message includes destination information and relay information of the source UE, the destination information is configured to indicate a candidate U2U relay of the source UE, and the relay information of the source UE is configured to indicate whether the source UE is capable of acting as a target UE for U2U relay communication; and
in S1220, a response message sent by a monitoring device is received, the response message includes relay information of the monitoring device, and the relay information of the monitoring device is configured to indicate whether the monitoring device wants to act as a U2U relay of the source UE.

In some embodiments, the response message includes a relay response, and the relay response is configured to indicate whether the monitoring device wants to act as the U2U relay of the source UE.

In an embodiment of the present disclosure, since the source UE broadcasts the request message, it may receive response messages returned by one or more monitoring devices.

The response message may come from a monitoring device pointed to by the target information or another device other than the monitoring device indicated by the target information.

The response message may include:
a relay acceptance message, which may be a response message returned by the monitoring device pointed to by the destination information;
   or,
a relay rejection message, which may be returned by the monitoring device pointed to by the target information, or by a monitoring device other than the monitoring device pointed to by the target information.

For example, if the monitoring device pointed to by the destination information is capable of acting as the U2U relay of the source UE, the relay acceptance message can be sent to the source UE.

If the monitoring device pointed to by the target information does not want to act as the U2U relay of the source UE, the relay rejection message may be sent to the source UE.

In summary, the response message may include the relay response, which may be carried by a result field. The relay response clarifies whether the source UE wants to act as the U2U relay of the source UE.

In some embodiments, the response message further includes the relay information of the monitoring device. The relay information of the monitoring device is configured to indicate whether the monitoring device wants to act as the target UE for the U2U relay communication.

The relay information of the monitoring device may also include:
relay hop count information, indicating the number of relay hops supported by the source UE when acting as the target UE for the U2U relay communication;
   and/or,
relay indication, indicating whether the source UE is capable of acting as the target UE for the U2U relay communication.

In an embodiment, the relay information may include the relay hop count information alone, and the relay hop count information may indicate the number of relay hops supported by the monitoring device of the current U2U relay communication when it acts as the target UE for the U2U relay communication. In this case, if the monitoring device supports acting as the target UE for the U2U relay communication, the number of relay hops is at least 1.

If the monitoring device does not support acting as the target UE for the U2U relay communication, the number of relay hops is 0 or a value of the number of relay hops is null. In this way, even if the relay information includes the relay hop count information alone, the U2U relay can easily know whether the monitoring device supports acting as the target UE for the U2U relay, and also can know the number of relay hops supported by the monitoring device when acting as the target UE for the U2U relay communication.

In another embodiment, the relay information may include the relay indication alone, and the relay indication may directly indicate whether the monitoring device supports acting as the target UE for the U2U relay communication.

For example, the relay indication may be carried by one bit, and two bit values of the bit may respectively represent that the monitoring device supports acting as the target UE for the U2U relay communication, or does not support acting as the target UE for the U2U relay communication.

In yet another embodiment, the relay information includes both the relay hop count information and the relay indication.

The relay hop count information indicates the number of hops supported by the monitoring device when acting as the target UE for the U2U relay communication, and the relay indication may be used by the U2U relay to quickly know whether the monitoring device can act as the target UE for the U2U relay. In some cases, the relay indication may also be used by the U2U relay to determine whether the relay hop count information needs to be further decoded. If the relay indication indicates that the monitoring device does not support acting as the target UE for the U2U relay communication, the U2U relay does not need to decode the relay hop count information, thereby reducing unnecessary decoding.

In some cases, the monitoring device has the capability to act as the target UE for the U2U relay communication, but according to the user instruction, this UE does not want to act as the target UE for the U2U relay communication. In some cases, the monitoring device does not have the capability to act as the target UE for the U2U relay communication. For example, if the monitoring device does not obtain the authorization from the network side to act as the target UE for the U2U relay communication, it is one of manifestations that the monitoring device does not have the capability to act as the target UE for the U2U relay communication.

For example, the monitoring device wants to act as the target UE for the U2U relay communication, and the relay hop count information indicates that the number of relay hops supported by the monitoring device is greater than 0; or, the monitoring device does not want to act as the target UE for the U2U relay communication, and the relay hop count information indicates that the number of relay hops supported by the monitoring device is equal to 0 or the value of the relay hop count information is null.

In some embodiments, the monitoring device wants to act as the target UE for the U2U relay communication, and the relay indication has a first value indicating that the monitoring device wants to act as the target UE; or, the monitoring device wants to act as the target UE for the U2U relay communication, and the relay indication has a second value indicating that the monitoring device does not want to act as the target UE.

If the relay indication may include one or more bits, these bits have different values, the first value is a first value indicating that the monitoring device wants to act as the target UE, and other values may be a second value indicating that the monitoring device does not want to act as the target UE for the U2U relay. In short, the first value is different from the second value here.

In an embodiment of the present disclosure, if the response message returned by the monitoring device to the source UE includes the relay information of the monitoring device, then if the source UE can act as a U2U relay (i.e., a relay device) for other U2U relay communications, the source UE can update, based on the relay information, the target UE information it maintains, or send the relay information to other U2U relays to facilitate other U2U relays to update the target UE information.

In some embodiments, the method further includes:
when the response message is the relay acceptance message, a layer 2 connection with a U2U relay that sent the relay acceptance message is established;
when the layer 2 connection with the U2U relay is established, a layer 3 connection between the source UE and a target UE is established based on the layer 2 connection between the U2U relay and the target UE; and
when the layer 3 connection between the source UE and the target UE is completed, end-to-end communication between the source UE and the target UE is facilitated.

The layer 2 connection and the layer 3 connection here may be a SL layer 2 connection and a SL layer 3 connection, respectively.

As shown in FIG. 5, embodiments of the present disclosure provide a method for processing information, which is performed by a monitoring device and includes S2110.

In the S2110, a request message sent by a source UE is monitored, and the request message at least includes destination information and relay information of the source UE;
the destination information is configured to indicate a candidate device for U2U relay communication of the source UE; and
the relay information of the source UE is configured to indicate whether the source UE is capable of acting as a target UE for the U2U relay communication.

For example, if a device is authorized by the network to act as the U2U relay, it will monitor a SL broadcast channel, so that the monitoring device will monitor the request message broadcasted by the source UE.

The request message may include the destination information and the relay information of the source UE.

The monitoring device may determine, according to the request message broadcasted by the source UE and the relay information, whether the source UE wants to act as the target UE for the U2U relay communication. If the source UE wants to act as the target UE for the U2U relay communication, information of the source UE will be added to the target UE information maintained by the monitoring device.

The monitoring device may be any form of terminal device and/or a relay node deployed or designated by a network operator.

As shown in FIG. 6, embodiments of the present disclosure provide a method for processing information, which is performed by a monitoring device and includes:
in S2210, a request message sent by a source UE is monitored, and the request message at least includes destination information and relay information of the source UE; and
in S2220, target UE information maintained by the monitoring device is created or updated according to the relay information.

For example, the current monitoring device creates the target UE information, and when the relay information indicates that the source UE is able to act as the target UE for the U2U relay, the monitoring device can create the target UE information. If the current monitoring device has already created the target UE information, the target UE information maintained by the monitoring device can be directly updated according to the relay information of the source UE.

The target UE information may be in the form of a target UE list. For example, information of the target UE discovered by the monitoring device may be added to the target UE list. The target UE information includes but is not limited to a user information identity (User Info ID) and/or a layer 2 identity of the target UE.

In an embodiment of the present disclosure, when the monitoring device monitors the request message sent by the source UE, it will create or update, according to the relay information carried in the request message, the target UE information maintained by itself.

For example, creating or updating, according to the relay information, the target UE information maintained by the monitoring device may include:
in a case where the relay information indicates that the source device wants to act as the target UE for the U2U relay or supports acting as the target UE for the U2U relay and the target UE information maintained by the monitoring device does not include the information of the source UE, the information of the source UE is added to the target UE information maintained by the monitoring device; and
in a case where the relay information indicates that the source device wants to act as the target UE for the U2U relay or supports acting as the target UE for the U2U relay and the target UE information maintained by the monitoring includes the information of the source UE, a validity timer for maintaining the information of the source UE is updated.

If the validity timer times out and no information is received that a target UE indicating that it can act as the target UE for the U2U relay communication, the monitoring device will delete information of the UE from the target UE information it maintains.

Duration information of the validity timer can be indicated by time information carried by the relay information. Alternatively, a duration of the validity timer can also be determined according to a relay configuration received by the monitoring device from the network device or according to a protocol agreement. In short, there are many ways to determine the duration of the validity timer, which will not be listed here one by one.

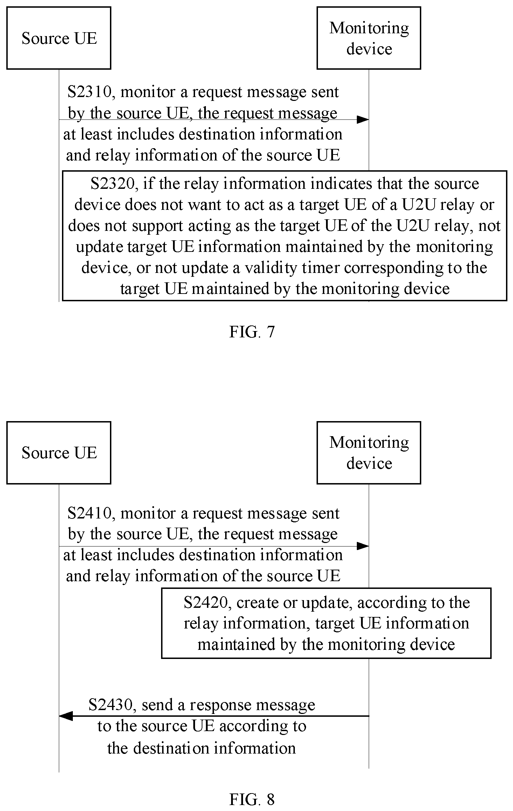

As shown in FIG. 7, embodiments of the present disclosure provide a method for processing information, which is performed by a monitoring device and includes:
in S2310, a request message sent by a source UE is monitored, and the request message at least includes destination information and relay information of the source UE; and
in S2320, if the relay information indicates that the source device does not want to act as a target UE of a U2U relay or does not support acting as the target UE of the U2U relay, target UE information maintained by the monitoring device is not updated, or a validity timer corresponding to the target UE maintained by the monitoring device is not updated.

If the monitoring device is not a device pointed to by the destination information, the monitoring device may return a response message to the source UE, or may not return the response message to the source UE.

If the monitoring device is the device pointed to by the target information, and the monitoring device wants to act as the U2U relay of the source UE, the monitoring device will return the response message to the source UE. Alternatively, if the monitoring device is the device pointed to by the target information, and the monitoring device does not want to act as the U2U relay of the source UE, the monitoring device may return the response message to the source UE, or may not return the response message to the source UE. If the monitoring device does not return the response message to the source UE, it may directly ignore or discard the request message provided by the source UE.

As shown in FIG. 8, embodiments of the present disclosure provide a method for processing information, which is performed by a monitoring device and includes:
in S2410, a request message sent by a source UE is monitored, and the request message at least includes destination information and relay information of the source UE;
in S2420, target UE information maintained by the monitoring device is created or updated according to the relay information; and
in S2430, a response message is sent to the source UE according to the destination information.

The response message may include a relay response and/or relay information of the monitoring device.

The relay response is used to indicate whether the monitoring UE acts as a U2U relay of the source UE.

The relay information of the monitoring device may indicate whether the monitoring device is able to act as a target UE for other U2U relay communications.

There is no specific execution order between the step S2420 and the step S2430. For example, S2420 may be executed before S2430, or S2430 may be executed before S2420.

In an embodiment of the present disclosure, if the monitoring device receives a request message sent by the source UE, it can return the response message to the source UE based on whether it is the device pointed to by the destination information included in the request message.

For example, sending the response message to the source UE according to the destination information includes:
in a case where the destination information points to the monitoring device, a relay acceptance message is sent to the source UE;
   or,
in a case where the destination information does not point to the monitoring device, a relay rejection message is sent to the source UE.

The relay acceptance message indicates that the monitoring device is able to act as the U2U relay of the source UE.

The relay rejection message indicates that the monitoring device does not want/is unwilling to act as the U2U relay of the source UE.

In some embodiments, in the case where the destination information points to the monitoring device, sending the relay acceptance message to the source UE includes:
in a case where the destination information points to the monitoring device and the monitoring device wants to act as the U2U relay of the source UE, the relay acceptance message is sent to the source UE.

For example, when the destination information points to the monitoring device but a current load rate of the monitoring device is too high or the battery power of the monitoring device is insufficient, the monitoring device may not want to act as the U2U relay of the source UE, and accordingly, may return the relay rejection message to the source UE. However, if the monitoring device wants to act as the U2U relay of the source UE, it will return the relay acceptance message to the source UE.

In summary, if the destination information points to the monitoring device, the monitoring device can determine, based on its own status information, whether to act as the U2U relay of the source UE.

The status information includes but is not limited to at least one of:
a load rate of the monitoring device;
a remaining battery power of the monitoring device;
a user indication received by the monitoring device; or
a relay user configuration of the monitoring device.

For example, if the current load rate of the monitoring device is higher than a load threshold, the monitoring device may want to or be able to act as the U2U relay of the source UE; otherwise, it may be unwilling to act as the U2U relay of the source UE.

For another example, the remaining battery power of the monitoring device is higher than a battery power threshold, otherwise it may be unwilling to act as the U2U relay of the source UE.

For another example, when the monitoring device receives the request message and the destination information points to itself, it displays prompt information and detects a user instruction acting on the prompt information. If the user instruction indicates that the monitoring device wants to act as the U2U relay of the source UE, it is determined that the monitoring device wants to act as the U2U relay of the source UE. Otherwise, it can be considered that the monitoring device does not want to act as the U2U relay of the source UE.

The prompt information may include the information of the source UE, or may not include the information of the source UE.

The prompt information may be displayed in a system message bar of the monitoring device or pop up in the form of a dialog box.

In short, there are many ways to present the prompt information, and the specific implementation is not limited to any of the above.

For example, the monitoring device may detect a user's setting operation by setting a page or a drop-down menu bar, and then generate the relay user configuration according to the setting operation.

The relay user configuration may indicate whether the corresponding monitoring device wants to act as a U2U relay of other UEs, or may indicate that the monitoring device only wants to act as a U2U relay of a specific UE.

In summary, there are many specific contents of the information of the relay user configuration, which will not be described in detail here.

In some embodiments, the method further includes:
in a case where the destination information does not point to the monitoring device, the request message is ignored.

If the monitoring device is not the U2U relay that the source UE wants to discover, the monitoring device can ignore the request message. Ignoring the request message here may include: not sending a response message of the request message to the source UE.

If the source UE of the current U2U relay communication can also act as the U2U relay for the U2U relay communication, the monitoring device will reply its own relay information to the source UE in the form of a response message. In this way, according to the relay information of the monitoring device, the source UE can update the target UE information maintained by the source UE or create the target UE information. For example, if the source UE does not store the target UE information locally, and when the source UE receives the relay information indicating that the monitoring device can act as the target UE for the U2U relay communication, it can create the target UE information, and add the information of the monitoring device to the created target UE information. The target UE information here can be presented in the form of a list.

In some embodiments, the relay information of the source UE includes: relay hop count information, indicating the number of relay hops supported by the source UE when it acts as the target UE for the U2U relay communication; and/or, relay indication, indicating whether the source UE is able to act as the target UE for the U2U relay communication.

For example, the relay hop count information indicates that the number of relay hops supported by the source UE is greater than 0, which means that the source UE is able to act as the target UE for the U2U relay communication.

For another example, the relay hop count information indicates that the number of relay hops supported by the source UE is equal to 0 or the value of the relay hop count information is null, and the source UE cannot act as the target UE for the U2U relay communication.

For example, the relay indication has the first value, and the source UE wants to act as the target UE for the U2U relay communication;
or,
the relay indication has a second value, and the source UE wants to act as the target UE for the U2U relay communication.

The second value is different from the first value.

In some embodiments, the relay information of the monitoring device includes:
relay hop count information, indicating the number of relay hops supported by the monitoring device when it acts as the target UE for the U2U relay communication; and/or, relay indication, indicating whether the monitoring device is able to act as the target UE for the U2U relay communication.

For example, the relay hop count information indicates that the number of relay hops supported by the monitoring device is greater than 0, which means that the monitoring device is able to act as the target UE for the U2U relay communication.

As another example, the relay hop count information indicates that the number of relay hops supported by the monitoring device is equal to 0 or the value of the relay hop count information is null, and the monitoring device cannot act as the target UE for the U2U relay communication.

For example, the relay indication has a first value, and the monitoring device wants to act as the target UE for the U2U relay communication;
or,
the relay indication has a second value, and the monitoring device wants to act as the target UE for the U2U relay communication.

The second value is different from the first value.

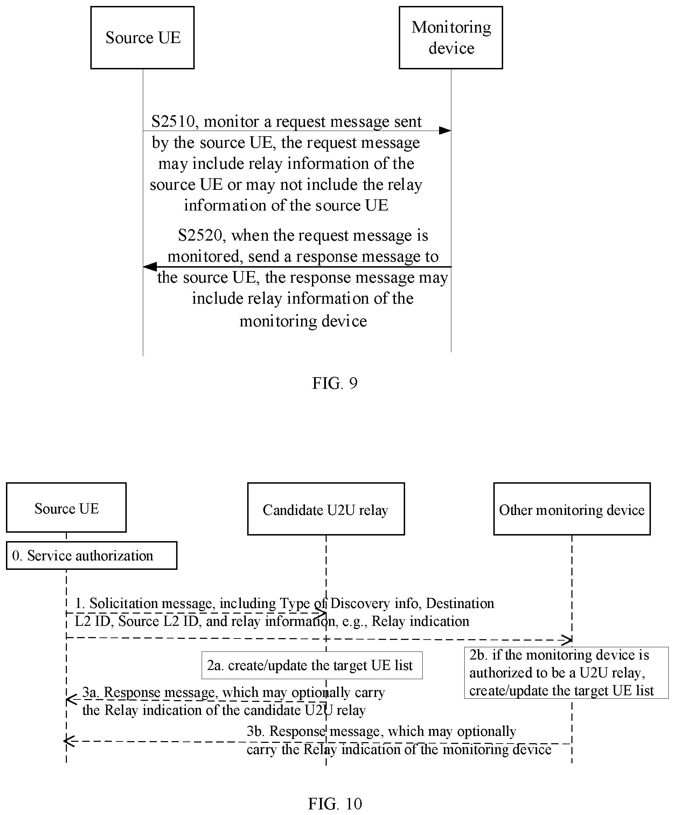

As shown in FIG. 9, embodiments of the present disclosure provide a method for processing information, which is performed by a monitoring device and includes:
in S2510, a request message sent by a source UE is monitored, and the request message may include relay information of the source UE or may not include the relay information of the source UE; and
in S2520, when the request message is monitored, a response message is sent to the source UE, the response message may include relay information of the monitoring device, and the relay information is configured to indicate whether the monitoring device is able to act as the target UE for the U2U relay communication.

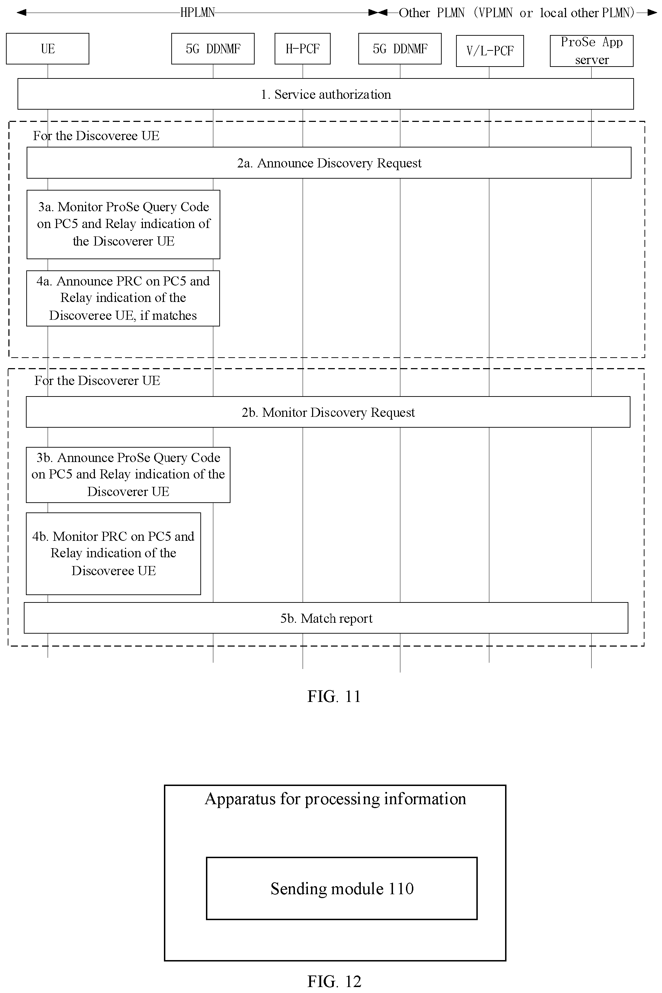

As shown in FIG. 10, a method for processing information provided by an embodiments of the present disclosure may include the following contents.
0. Service authorization of the source UE. Through the service authorization procedure, necessary policy and parameters for Direct Discovery are pre-configured in the source UE.
1. The source UE sends a Solicitation Announcement message, including Discovery Type, Destination L2 ID, Source L2 ID, Relay indication. When the source UE wants to be discovered via the U2U Relay, the Relay indication is included. For example, when the Relay indication value is 0 or the Relay indication is null, the source UE is not allowed to be discovered via the U2U Relay, which means that the source UE of the current U2U relay communication cannot act as the target UE for other U2U relay communications; when the Relay indication value is more than 1, it means that the source UE of this U2U relay communication is allowed to be discovered via U2U Relay with multiple hops. Here, the Destination L2 ID is one of the aforementioned destination information, and the Source L2 ID is one of the aforementioned information of the source UE.
2a. When the candidate U2U Relay receives the Announcement message that includes the Relay indication, it creates/updates the target UE list.
2b. When another monitoring device receives the Announcement message but is authorized to be a U2U relay but currently not act as the U2U Relay, it creates or updates the target UE list. In other cases, the other monitoring device ignores this information.
3a. The candidate U2N relay sends the Response message of the U2U relay, and the Response message includes a relay response and a relay indication of the candidate U2U relay. The relay response may be a result of the relay response.
3b. The other monitoring device sends the Response message of the U2U relay, and the Response message includes a relay response and a relay indication. The relay response may be a result of the relay response.
As shown in FIG. 11, a method for processing information provided by an embodiment of the present disclosure may include the following contents.

This procedure is applied for restricted 5G ProSe Direct Discovery when the ProSe enabled UE is served by the Nest Generation-Radio Access Network (NG-RAN).
1. 5G ProSe Direct Discovery service authorization. If the UE is authorized to perform restricted 5G ProSe Direct Discovery by using Model B, as a Discoveree UE, the following steps take place:
2a. When the UE is triggered to perform restricted 5G ProSe Direct Discovery, it sends a discovery request to the 5G direct discovery name management function (DDNMF) in the Home Public Land Mobile Network (HPLMN) to obtain a ProSe Response Code (PRC). The 5G DDNMF further interacts with ProSe Application (APP) Server for the authorization of the discovery request.
3a. If the request is successful and the UE is provided with a ProSe Response Code and an associated Discovery Query Filter(s), then the UE starts monitoring for the ProSe Query Code on the PC5 interface.
   When the Discoverer UE wants to be discovered via the U2U Relay, the Relay indication is included besides the ProSe Query Code. For example, when the Relay indication value is 0 or the Relay indication is null, the Discoverer UE is not allowed to be discovered via the U2U Relay; when the Relay indication value is more than 1, it means the UE is allowed to be discovered via the U2U Relay with multiple hops
4a. If a received ProSe Query Code (PQC) matches any of the Discovery Query Filter(s), the UE announces the associated ProSe Response Code on the PC5 interface, including the Relay indication. If the Discoveree UE wants to be discovered via the U2U Relay, then the Discoveree UE adds the Discoverer UE into the target UE list.
   If the UE is authorized to perform restricted 5G ProSe Direct Discovery by using Model B, as a Discoverer UE, the following steps take place:
2b. When the UE is triggered to perform the restricted 5G ProSe Direct Discovery, it sends a discovery request to the 5G DDNMF in the HPLMN for a ProSe Query Code. The 5G DDNMF further interacts with the ProSe Application Server for the authorization of the discovery request.
3b. If the request is successful and the UE is provided with a ProSe Query Code and the Discovery Response Filter(s) consisting of ProSe Response Code(s) and ProSe Application Mask(s), the UE announces the ProSe Query Code on the PC5 interface, including the Relay indication, if the Discoverer UE wants to be discovered via the U2U Relay.
4b. The UE starts to monitor on the PC5 interface for any ProSe Response Code(s) that might match the Discovery Response Filter(s). When the Discoveree UE wants to be discovered via the U2U Relay, then the Relay indication is included beside the ProSe Response Code. Then the Discoverer UE is added into the target UE list which is potentially used for the U2U Relay.
5b. When the UE detects a match for one or more ProSe Response Code(s), it sends a matching report to a network device such as the DDNMF.

Non-roaming direct discovery procedures cover the case where both the Discoveree UE and the Discoverer UE are served by their respective HPLMN. Roaming direct discovery procedures cover other cases.

It should be noted that the above procedure can be performed regardless of whether the UE is located in the HPLMN or other PLMNs. Other PLMNs may include: a Visited Public Land Mobile Network (VPLMN) and other local PLMNs.

The network device shown in FIG. 11 further includes: a Home-Policy Control Function (H-PCF), a Visited/Local-policy Control Function (V/L-PCF), etc.

As shown in FIG. 12, embodiments of the present disclosure provide an apparatus for processing information, and the apparatus includes:
a sending module 110, configured to broadcast a request message, and the request message includes destination information and relay information of the source UE;
the destination information is configured to indicate a candidate User Equipment to User Equipment (U2U) relay of the source UE; and
the relay information of the source UE is configured to indicate whether the source UE is capable of acting as a target UE for U2U relay communication.

The apparatus for processing the information may be the source UE.

The sending module 110 may include a network interface and/or a transceiver antenna.

In some embodiments, the apparatus for processing the information may further include a memory, which may be connected to the sending module 110 and may at least be configured to store the request message.

In some embodiments, the relay information of the source UE includes:
relay hop count information, indicating a relay hop count supported by the source UE when acting as the target UE for the U2U relay communication;
   and/or,
relay indication, indicating whether the source UE is capable of acting as the target UE for the U2U relay communication.

In some embodiments, the source UE is capable of acting as the target UE for the U2U relay communication, and the relay hop count information indicates that the relay hop count supported by the source UE is greater than 0;
or,
the source UE is not capable of acting as the target UE for the U2U relay communication, and the relay hop count information indicates that the relay hop count supported by the source UE is equal to 0 or a value of the relay hop count information is null.

In some embodiments, the source UE wants to act as the target UE for the U2U relay communication, and the relay indication has a first value indicating that the source UE wants to act as the target UE;
or,
the source UE wants to act as the target UE for the U2U relay communication, and the relay indication has a second value indicating that the source UE does not want to act as the target UE.

In some embodiments, the apparatus further includes:
a receiving module, configured to receive a response message sent by a monitoring device;
the response message includes relay information of the monitoring device; and
the relay information of the monitoring device is configured to indicate whether the monitoring device is capable of acting as the target UE for the U2U relay communication.

The receiving module may be a network interface and/or a transceiver antenna.

The receiving module may receive the response message sent by the monitoring device, and the response message may include a relay response, and the relay response indicates whether the monitoring device will (or wants to) act as the U2U relay of the source UE.

The relay information of the monitoring device can also be used by the monitoring device to inform other devices whether the monitoring device itself can act as the target UE for the U2U relay communication.

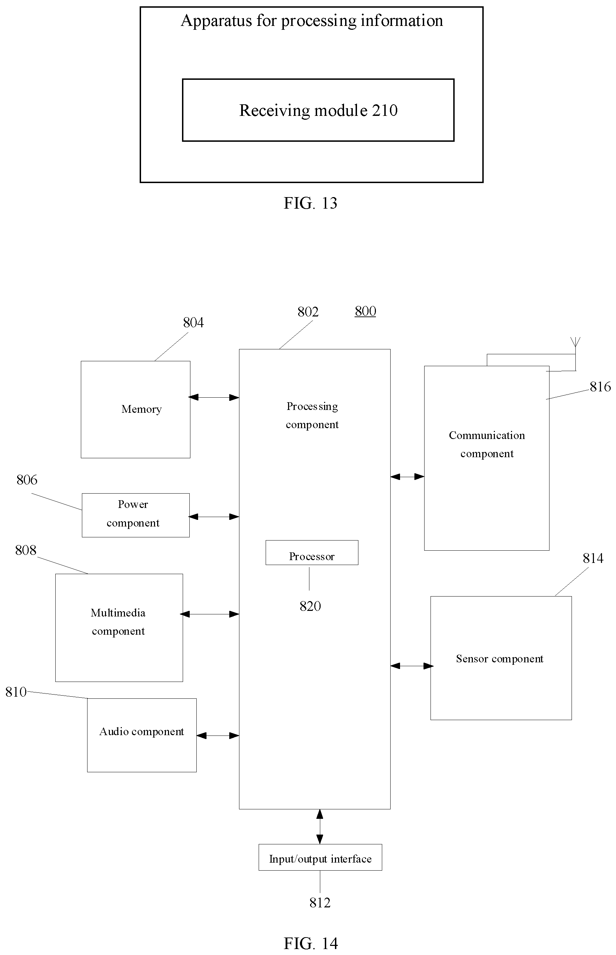

As shown in FIG. 13, embodiments of the present disclosure provide an apparatus for processing information, and the apparatus includes:
a receiving module 210, configured to monitor a request message sent by a source UE, and the request message at least includes destination information and relay information of the source UE;
the destination information is configured to indicate a candidate User Equipment to User Equipment (U2U) relay of the source UE; and
the relay information of the source UE is configured to indicate whether the source UE is capable of acting as a target UE for U2U relay communication.

The apparatus for processing the information may be a monitoring device.

The monitoring device can be any device authorized by the network device to act as the U2U relay.

The receiving module 210 may include a network interface and/or a transceiver antenna.

In some embodiments, the apparatus for processing the information may further include a memory, which may be connected to the sending module and may at least be configured to store the request message.

In some embodiments, the apparatus further includes:
a processing module, further configured to create or update, according to the relay information, target UE information maintained by the monitoring device.

In some embodiments, the apparatus further includes:
a sending module, configured to send a response message to the source UE according to the destination information.

In some embodiments, the sending module is further configured to, in a case where the monitoring device is pointed to by the destination information, send a relay acceptance message to the source UE; or, in a case where the monitoring device is not pointed to by the destination information, send a relay rejection message to the source UE.

In some embodiments, the sending module is configured to, in a case where the monitoring device is pointed to by the destination information, and the monitoring device wants to act as the U2U relay of the source UE, send the relay acceptance message to the source UE.

In some embodiments, the apparatus further includes:
a processing module, configured to, in a case where the monitoring device is not pointed to by the destination information, ignore the request message.

In some embodiments, the response message includes relay information of the monitoring device.

Embodiments of the present disclosure provide a communication device, including:
a memory configured to store executable instructions of a processor; and
a processor, connected to the memory,
the processor is configured to perform the method for processing the information provided by any of the aforementioned technical solutions.

The processor may include various types of storage mediums, which are non-transitory computer storage mediums that can continue to remember information stored thereon after the communication device loses power.

Here, the communication device includes the UE or the network element, and the network element can be any one of the first network element to the fourth network element mentioned above.

The processor can be connected to the memory via a bus, etc., and is configured to read the executable program stored in the memory, for example, at least one of the methods shown in FIGS. 4 to 9.

FIG. 14 shows a block diagram of a UE 800 according to an embodiment of the present disclosure. For example, the UE 800 may be a mobile phone, a computer, a digital broadcast terminal, a messaging device, a gaming console, a tablet device, a medical device, an exercise device, a personal digital assistant, etc.

Referring to FIG. 14, the UE 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the UE 800, such as the operations associated with display, telephone calls, data communications, camera operations, and recording operations. The processing component 802 may include one or more processors 820 to execute instructions to generate all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the UE 800. Examples of such data include instructions for any applications or methods operated on the UE 800, contact data, phonebook data, messages, pictures, video, etc. The memory 804 may be implemented using any type of volatile or non-volatile memory apparatuses, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the UE 800. The power component 806 may include a power management system, one or more power sources, and any other components associated with the generation, management, and distribution of power in the UE 800.

The multimedia component 808 includes a screen providing an output interface between the UE 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a duration and a pressure associated with the touch or swipe action. In some embodiments, the multimedia component 808 includes a front camera and/or a rear camera. The front camera and the rear camera may receive an external multimedia datum while the UE 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone (MIC) configured to receive an external audio signal when the UE 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide state assessments of various aspects of the UE 800. For instance, the sensor component 814 may detect an open/closed state of the UE 800, relative positioning of components, e.g., the display and the keypad, of the UE 800, a change in position of the UE 800 or a component of the UE 800, a presence or absence of user contact with the UE 800, an orientation or an acceleration/deceleration of the UE 800, and a change in temperature of the UE 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the UE 800 and other devices. The UE 800 may access a wireless network based on a communication standard, such as WiFi, 2G, or 3G, or a combination thereof. In an embodiment, the communication component 816 receives a broadcast signal or broadcast associated information from an external broadcast management system via a broadcast channel. In an embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an embodiment of the present disclosure, the UE 800 may be implemented with one or more application specific integrated circuits (ASICs), digital signal processors (DSPs), digital signal processing devices (DSPDs), programmable logic devices (PLDs), field programmable gate arrays (FPGAs), controller, micro-controller, microprocessors, or other electronic components, for performing the above described methods.

In an embodiment of the present disclosure, there is further provided a non-transitory computer readable storage medium including instructions, such as the memory 804 including instructions, the above instructions may be executed by the processor 820 in the UE 800 for generating the above-described methods. For example, the non-transitory computer-readable storage medium may be a ROM, a Random Access Memory (RAM), a CD-ROM, a magnetic tape, a floppy disc, an optical data storage device, and the like.

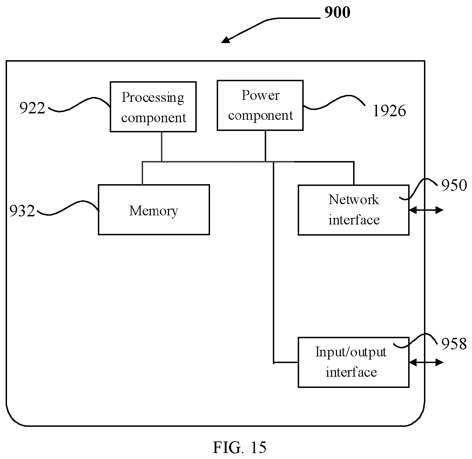

As shown in FIG. 15, an embodiment of the present disclosure provides a structure of a communication device. For example, a communication device 900 may be the aforementioned source UE, the monitoring device and/or the U2U relay.

Referring to FIG. 15, the communication device 900 includes a processing component 922, which further includes one or more processors and a memory resource represented by a memory 932 for storing instructions executable by the processing component 922, such as an application program. The application program stored in the memory 932 may include one or more modules, each corresponding to a set of instructions. In addition, the processing component 922 is configured to execute the instructions to execute the aforementioned any method applied on the access network device, for example, at least one of the methods shown in FIGS. 4 to 9.

The communication device 900 may further include: a power component 926 configured to perform power management of the communication device 900, a wired or wireless network interface 950 configured to connect the communication device 900 to the network, and an input/output (I/O) interface 958. The communication device 900 may operate an operating system stored in the memory 932, such as Windows Server TM, Mac OS XTM, UnixTM, LinuxTM, FreeBSDTM, or the like.

Embodiments of the present disclosure further provide a communication system, including a source User Equipment (UE) and a monitoring device;

the source UE is configured to execute the method for processing the information provided by any of the aforementioned technical solutions, for example, the method described in any one of FIGS. 3 to 6.

The monitoring device is configured to execute the method for processing the information provided by any of the aforementioned technical solutions, for example, the method described in any one of FIGS. 7 to 9.

For example, the communication system can at least be configured to execute the method shown in FIG. 10 and/or FIG. 11.

Other implementations of the present disclosure will be apparent to those skilled in the art from consideration of the specification and practice of the present disclosure disclosed here. The present disclosure is intended to cover any variations, uses, or adaptations of the present disclosure following the general principles thereof and including the common general knowledge or habitual technical means in the technical field not disclosed in the present disclosure. The specification and embodiments are considered as exemplary only, and a true scope and spirit of the present disclosure is indicated by the appending claims.

It will be appreciated that the present disclosure is not limited to the exact construction that has been described above and illustrated in the accompanying drawings, and that various modifications and changes may be made without departing from the scope thereof. It is intended that the scope of the present disclosure only be limited by the appended claims.

## Claims

1. A method for processing information, performed by a source User Equipment (UE), and comprising:
broadcasting a request message, wherein the request message comprises destination information and relay information of the source UE;
wherein the destination information is configured to indicate a candidate User Equipment to User Equipment (U2U) relay of the source UE; and
the relay information of the source UE is configured to indicate whether the source UE is capable of acting as a target UE for U2U relay communication.

2. The method according to claim 1, wherein the relay information of the source UE comprises:
relay hop count information, indicating a relay hop count supported by the source UE when acting as the target UE for the U2U relay communication; and/or,
relay indication, indicating whether the source UE is capable of acting as the target UE for the U2U relay communication.

3. The method according to claim 2, wherein:
the source UE is capable of acting as the target UE for the U2U relay communication, and the relay hop count information indicates that the relay hop count supported by the source UE is greater than 0; or,
the source UE is not capable of acting as the target UE for the U2U relay communication, and the relay hop count information indicates that the relay hop count supported by the source UE is equal to 0 or a value of the relay hop count information is null.

4. The method according to claim 2, wherein:
the source UE wants to act as the target UE for the U2U relay communication, and the relay indication has a first value indicating that the source UE wants to act as the target UE; or,
the source UE wants to act as the target UE for the U2U relay communication, and the relay indication has a second value indicating that the source UE does not want to act as the target UE.

5. The method according to claim 4, wherein the method further comprises:
receiving a response message sent by a monitoring device;
wherein the response message comprises relay information of the monitoring device; and
the relay information of the monitoring device is configured to indicate whether the monitoring device is capable of acting as the target UE for the U2U relay communication.

6. A method for processing information, performed by a monitoring device, and comprising:
monitoring a request message sent by a source UE, wherein the request message at least comprises destination information and relay information of the source UE;
wherein the destination information is configured to indicate a candidate User Equipment to User Equipment (U2U) relay of the source UE; and
the relay information of the source UE is configured to indicate whether the source UE is capable of acting as a target UE for U2U relay communication.

7. The method according to claim 6, wherein the method comprises:
creating or updating, according to the relay information, target UE information maintained by the monitoring device.

8. The method according to claim 6, wherein the method further comprises:
sending a response message to the source UE according to the destination information.

9. The method according to claim 8, wherein sending the response message to the source UE according to the destination information comprises:
in a case where the monitoring device is pointed to by the destination information, sending a relay acceptance message to the source UE; or,
in a case where the monitoring device is not pointed to by the destination information, sending a relay rejection message to the source UE.

10. The method according to claim 9, wherein in the case where the monitoring device is pointed to by the destination information, sending the relay acceptance message to the source UE comprises:
in a case where the monitoring device is pointed to by the destination information, and the monitoring device wants to act as the U2U relay of the source UE, sending the relay acceptance message to the source UE.

11. The method according to claim 6, wherein the method further comprises:
in a case where the monitoring device is not pointed to by the destination information, ignoring the request message.

12. The method according to any one of claims 10 to 11, wherein the response message comprises relay information of the monitoring device.

13. An apparatus for processing information, comprising:
a sending module, configured to a request message, wherein the request message comprises destination information and relay information of a source UE;
wherein the destination information is configured to indicate a candidate User Equipment to User Equipment (U2U) relay of the source UE; and
the relay information of the source UE is configured to indicate whether the source UE is capable of acting as a target UE for U2U relay communication.

14. The apparatus according to claim 13, wherein the relay information of the source UE comprises:
relay hop count information, indicating a relay hop count supported by the source UE when acting as the target UE for the U2U relay communication; and/or,
relay indication, indicating whether the source UE is capable of acting as the target UE for the U2U relay communication.

15. The apparatus according to claim 14, wherein:
the source UE is capable of acting as the target UE for the U2U relay communication, and the relay hop count information indicates that the relay hop count supported by the source UE is greater than 0; or,
the source UE is not capable of acting as the target UE for the U2U relay communication, and the relay hop count information indicates that the relay hop count supported by the source UE is equal to 0 or a value of the relay hop count information is null.

16. The apparatus according to claim 14, wherein:
the source UE wants to act as the target UE for the U2U relay communication, and the relay indication has a first value indicating that the source UE wants to act as the target UE; or,
the source UE wants to act as the target UE for the U2U relay communication, and the relay indication has a second value indicating that the source UE does not want to act as the target UE.

17. The apparatus according to claim 16, wherein the apparatus further comprises:
a receiving module, configured to receive a response message sent by a monitoring device;
wherein the response message comprises relay information of the monitoring device; and
the relay information of the monitoring device is configured to indicate whether the monitoring device is capable of acting as the target UE for the U2U relay communication.

18. An apparatus for processing information, comprising:
a receiving module, configured to monitor a request message sent by a source UE, wherein the request message at least comprises destination information and relay information of the source UE;
wherein the destination information is configured to indicate a candidate User Equipment to User Equipment (U2U) relay of the source UE; and
the relay information of the source UE is configured to indicate whether the source UE is capable of acting as a target UE for U2U relay communication.

19. The apparatus according to claim 18, wherein the apparatus further comprises:
a processing module, further configured to create or update, according to the relay information, target UE information maintained by the monitoring device.

20. The apparatus according to claim 18, wherein the apparatus further comprises:
a sending module, configured to send a response message to the source UE according to the destination information.

21. The apparatus according to claim 20, wherein the sending module is further configured to, in a case where the monitoring device is pointed to by the destination information, send a relay acceptance message to the source UE; or, in a case where the monitoring device is not pointed to by the destination information, send a relay rejection message to the source UE.

22. The apparatus according to claim 21, wherein the sending module is configured to, in a case where the monitoring device is pointed to by the destination information, and the monitoring device wants to act as the U2U relay of the source UE, send the relay acceptance message to the source UE.

23. The apparatus according to claim 18, wherein the apparatus further comprises:
a processing module, further configured to, in a case where the monitoring device is not pointed to by the destination information, ignore the request message.

24. The apparatus according to any one of claims 10 to 11, wherein the response message comprises relay information of the monitoring device.

25. A communication device, comprising a processor, a transceiver, a memory, and an executable program stored in the memory and capable of being run by the processor, wherein the processor performs the method according to any one of claims 1 to 5 or 6 to 12 when running the executable program.

26. A computer storage medium having stored thereon an executable program that, when executed by a processor, is capable of implementing the method according to any one of claims 1 to 5 or 6 to 12.

27. A communication system, comprising a source User Equipment (UE) and a monitoring device;
the source UE is configured to perform the method according to any one of claims 1 to 5; and
the monitoring device is configured to perform the method according to any one of claims 6 to 12.
